# EUROPEAN PATENT APPLICATION

(11) **EP 4 706 888 A1**
(43) Date of publication of application: **11.03.2026**
(21) Application number: 25199422.4
(22) Date of filing: 01.09.2025
(51) Int. Cl.: B25B 1/10, B25B 1/24, B23C 1/00, B23Q 3/06

(54) **CLAMP FOR RETAINING A PIECE TO BE WORKED AND METHOD FOR WORKING A PIECE**

(30) Priority: 04.09.2024 IT 202400019762
(71) Applicant: FCS System Srl, 31032 Casale sul Sile (TV) (IT)
(72) Inventor: CALZAVARA, Andrea, 31057 Silea (TV) (IT); TREVISIOL, Nico, 31052 Maserada sul Piave (TV) (IT)
(74) Representative: Caldon, Giuliano

(57) **Abstract**

Clamp (1) for retaining a piece (100) to be worked, which comprises a support body (2) and two jaws (3), at least one of which is movably connected to the support body (2) and is actuatable to be moved close to or away from the other jaw (3) along the movement direction (X). Moreover, the clamp (1) comprises at least one insert (5) mounted on each jaw (3) and the above inserts (5) are each provided with a retention portion (6) which is susceptible of being inserted in a corresponding first milled groove (101) substantially counter-shaped with respect to the same retention portion (6) and made on one side (102) of a piece (100) to be blocked in position. The retention portion (6) of each insert (7) has, on a first reference plane (P1), a section with a first external profile (7) extended along an arc of circumference and has, on a second reference plane (P2) transverse to the first reference plane (P1), a section with a second external tapered profile (8) that is extended, narrowing up to one end (36) thereof which has at least one point in common with the first external profile (7).

## Description

### Field of application

The present invention relates to a clamp for retaining a piece to be worked and to a method for working a piece, according to the respective independent claims.

In particular, the clamp and the method according to the invention are advantageously used in the mechanical industry, in particular for retaining in position in a precise and repeatable manner pieces that must be subjected to one or more machining operations.

More specifically, the clamp and the method in question advantageously allow a piece to be retained in position with respect to a support base, in particular that of a machine tool (for example of the CNC type), which is advantageously made of metallic material, or of composite material, or of any other material. The invention therefore fits into the context of the industrial sector of precision mechanics.

### Prior art

In the field of semi-finished product working by means of turning, milling, drilling, etc., there is a particularly felt need to stably retain the semi-finished products to be worked.

For this purpose, clamps are known which are provided with a support body, which is designed to be fixed to a support base usually coupled to or forming part of a machine tool for working semi-finished products, and with two jaws, which are slidably associated with the main body along a movement direction and are actuatable to be moved along such direction towards each other for closing on a piece which must be retained in position during a working operation (roughing, finishing, milling, drilling, etc.) or away from each other to allow the removal of the piece after it has been worked.

Therefore, in order to work a piece, the clamp is generally fixed with its support body to the support base associated with or belonging to a machine tool (for example, a CNC type), the piece is placed between the jaws of the clamp spaced apart from each other, the aforementioned jaws are operated to translate along the movement direction until they close on the piece to retain it in position and, finally, the clamped piece is subjected to one or more working operations by the machine tools after a calibration has been performed to correctly position the machine tools with respect to the piece to be worked, such calibration may, for example, be performed using a special feeler device designed to recognize the position and orientation of the piece and belonging to the CNC type machine.

However, the method briefly described so far and the clamp used have proven to be not free from drawbacks in practice.

The main drawback lies in the fact that, by placing the piece between the jaws of the clamp and closing the jaws thereon, it is not possible to choose in which position and in which orientation the piece will remain locked before closing the jaws. Therefore, after the jaws of the clamp are moved apart to release the piece, there is no longer any way to close the jaws on the piece and lock it again in the same initial position and orientation.

This therefore prevents the piece from being easily subjected to different types of working by moving it several times in sequence from the machine tool on whose support base the clamp is installed to another machine and vice versa, or the piece from being worked on the same machine by exposing a different side of the piece to the tools step by step.

Furthermore, traditional clamps for retaining pieces during working are provided with jaws having two substantially planar contact faces which may close on the piece, and therefore the jaws are not optimized for the particular piece to be worked.

### Disclosure of the invention

In this situation, the problem underlying the present invention is therefore to overcome the drawbacks of the prior art by providing a clamp for retaining a piece and a method for working a piece, which allow the piece to be locked in a predetermined position and orientation.

A further object of the present invention is to provide a clamp for retaining a piece and a method for working a piece which allows the piece to be unlocked and re-locked in exactly the same position and with the same orientation multiple times.

A further object of the present invention is to provide a clamp for retaining a piece and a method for working a piece which are flexible and may be adapted to different pieces easily.

A further object of the present invention is to provide a clamp for retaining a piece and a method for working a piece which are simple and cost-effective to produce.

A further object of the present invention is to provide a clamp for retaining a piece and a method for working a piece which are operationally completely reliable.

### Brief description of the drawings

The technical features of the invention, according to the aforesaid objects, are clearly seen from the contents of the claims set out below and the advantages thereof will become more evident in the detailed description which follows, made with reference to the accompanying drawings, which represent a purely exemplifying and non-limiting embodiment thereof, in which:

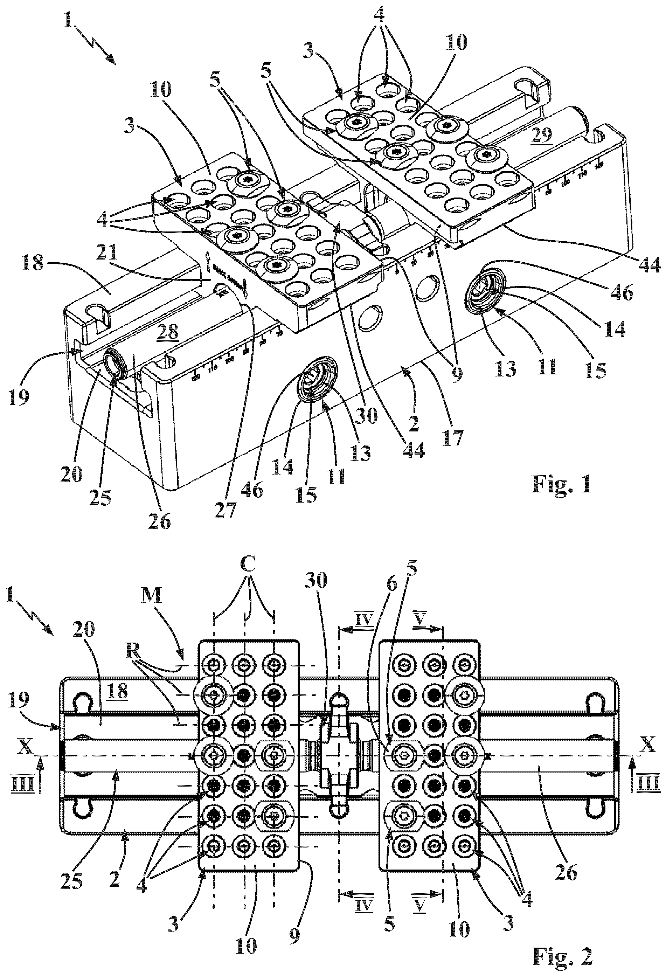

- Fig. 1 shows a perspective view of a clamp for retaining a piece which is the object of the present invention according to a first embodiment, usable in a method for working a piece which is also the object of the present invention;
- Fig. 2 shows a plan view of the clamp of Figure 1;
- Fig. 3 shows a sectional side view of the clamp of Figure 1, in which the section is obtained along the line III-III of Figure 2;
- Fig. 4 shows a sectional side view of the clamp of Figure 1, in which the section is obtained along the line IV-IV of Figure 1;
- Fig. 5 shows a sectional side view of the clamp of Figure 1, in which the section is obtained along the line V-V of Figure 2;
- Fig. 6 shows a perspective view of an insert of the clamp of Figure 1;
- Fig. 7 shows a plan view of the insert of Figure 6, in which a first reference plane is visible;
- Fig. 8 shows a perspective view of an insert of the clamp of Figure 1 different from the insert of Figure 6;
- Fig. 9 shows a plan view of the insert of Figure 8, in which a first reference plane is visible;

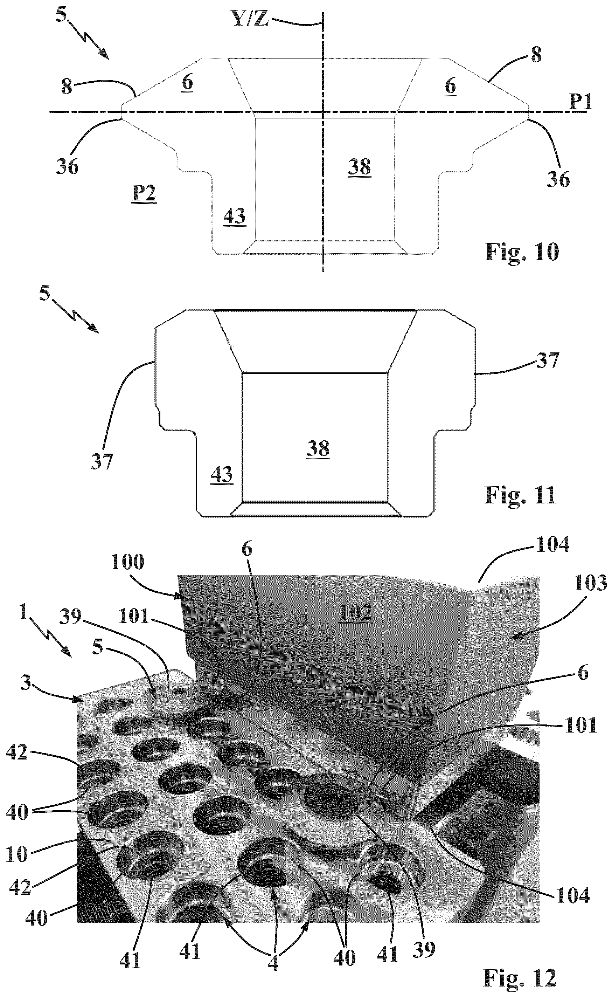

- Fig. 10 shows a sectional side view common to both the insert of Figure 6 and the insert of Figure 8, in which the section is obtained indifferently along the line X-X of Figure 7 or along the line X-X of Figure 9 and corresponds to a second reference plane;
- Fig. 11 shows a sectional side view of the insert of Figure 8, in which the section is obtained along the line XI-XI of Figure 9;
- Figure 12 shows a perspective view of a clamp according to the first embodiment of the present invention and of a piece to be worked during a first clamping step of the method which is in turn the object of the present invention, before the inserts have their retention portions inserted into corresponding first milled grooves obtained on opposite sides of a piece;

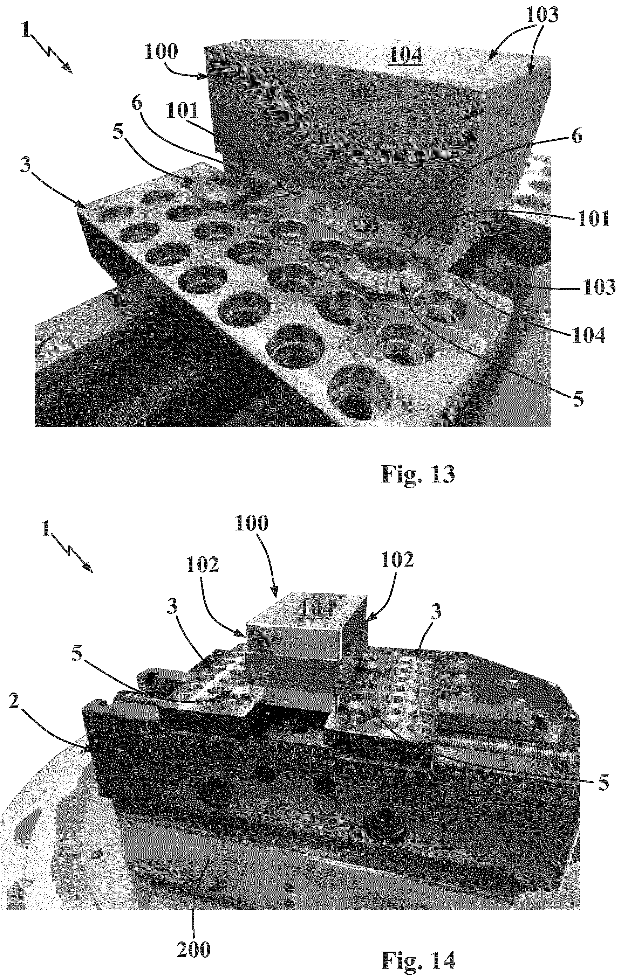

- Figure 13 shows a perspective view of the clamp and the piece of Figure 12 during the first clamping step of the method of the present invention with the inserts having their retention portions inserted in the first milled grooves;
- Figure 14 shows a perspective view of the clamp and the piece of Figure 12 at the end of a second working step of the method which is the object of the present invention;

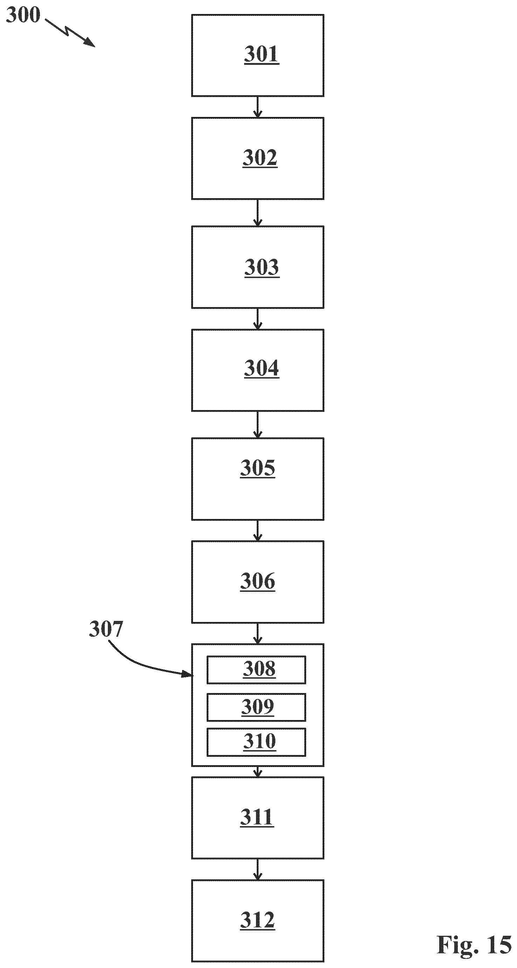

- Figure 15 shows a block diagram of the method of the present invention;
- Figure 16 shows a perspective view of a clamp according to a second embodiment of the present invention and of a piece to be worked during the first clamping step of the method in turn object to the present invention, with the inserts having their retention portions inserted in the first milled grooves;
- Figure 17 shows a further perspective view of the clamp and the piece of Figure 16, in the same first clamping step;
- Figure 18 shows a perspective view of one of the jaws of the clamp of Figure 16;
- Figure 19 shows a perspective view of a support element of the clamp of Figure 16.

### Detailed description of a preferred embodiment

With reference to the accompanying drawings, reference numeral 1 generally designates a clamp for retaining a piece 100 to be worked, which is the object of the present invention.

The clamp 1 in question comprises a support body 2 intended to be fixed to a support base 200, which may be installed adjacent to a machine tool to support the pieces that are to be subjected to working by the machine tool itself or may directly form part of the machine tool itself.

In more detail, the clamp 1 in question is advantageously provided with coupling means 11 designed to removably fix the support body 2 to the support base 200.

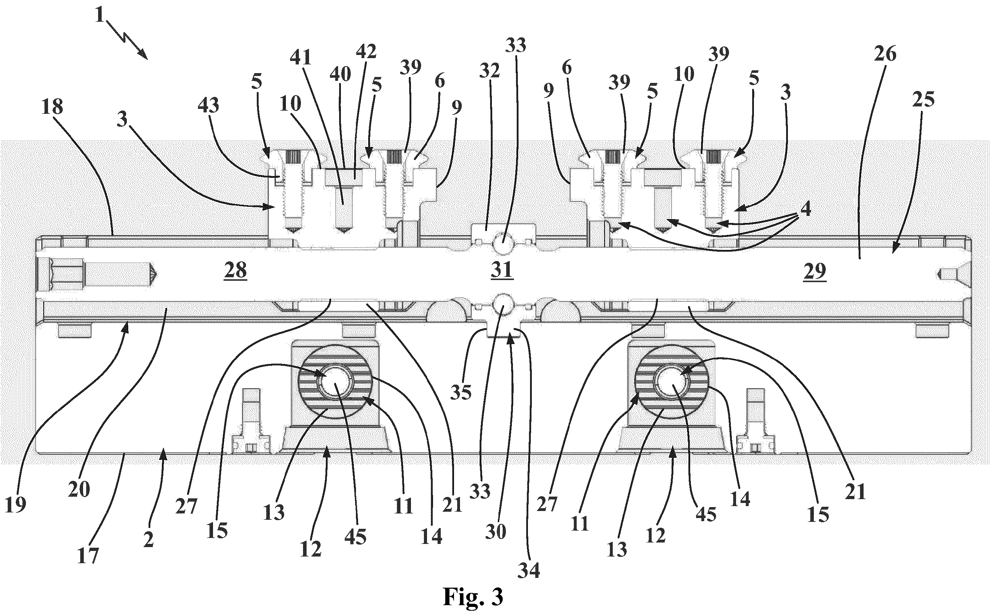

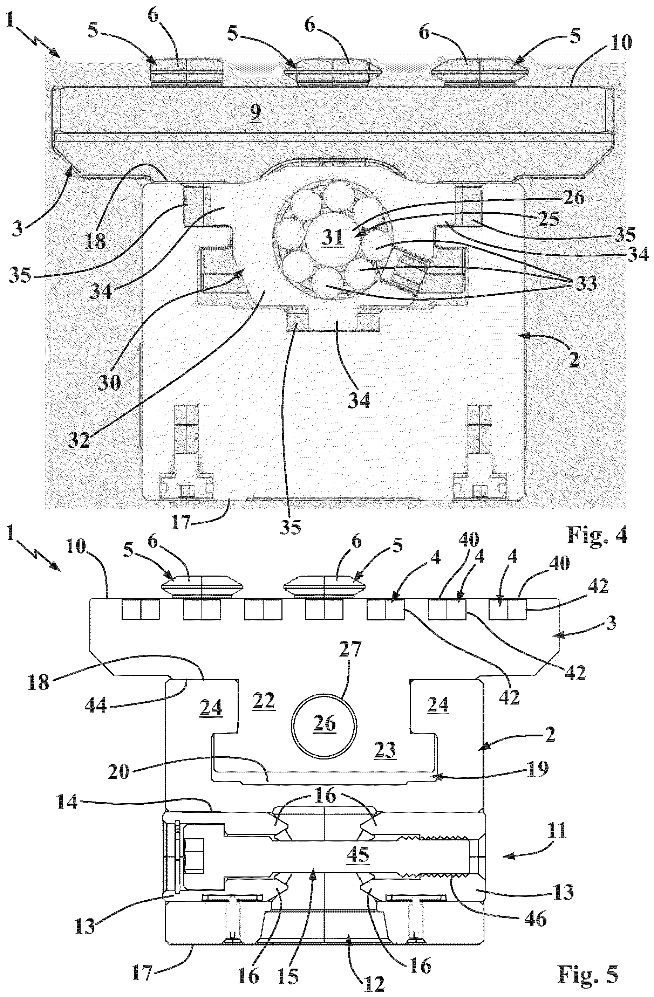

According to the embodiments illustrated in the accompanying figures, as visible in particular in Figure 3 and Figure 5, the coupling means 11 are advantageously provided with at least one tie rod (not illustrated), which comprises a shaped head insertable into a corresponding coupling seat 12 obtained on the support body 2 and a stem (in particular threaded) insertable into a corresponding hole (in turn in particular threaded) obtained on the support base 200, and two corresponding closing elements 13, which are slidably inserted into a guide channel 14 obtained on the support body 2 to intercept the coupling seat 12 and are switchable, in particular by means of a screw-nut mechanism 15, between a coupling configuration, in which they are closed against the shaped head housed in the coupling seat 12, and a release configuration, in which they are spaced from the aforementioned shaped head.

In this way, simply by acting on the screw-nut mechanism 15, it is possible to attach the support body 2 of the clamp 1 in question to the support base 200 or disconnect the aforementioned support body 2 from the support base 200.

In order to make the connection between the support body 2 of the clamp 1 and the support base 200 as resistant as possible, the closing elements 13 in the coupling configuration are preferably in a shape relationship with the shaped head of the tie rod and, even more preferably, the aforementioned closing elements 13 are provided with first teeth 16 designed to fit between corresponding second teeth belonging to the shaped head of the tie rod.

In more detail, the screw-nut mechanism 15 is provided with an operating screw 45 positioned across the two closing elements 13 and the shaped head of the tie rod and screwed into a threaded hole 46 made on at least one of the closing elements 13, which in particular have only one degree of freedom in translation along the guide channel 14 (i.e. in other words, the closing elements 13 may only translate within the guide channel 14 but not rotate).

In this way, by rotating the operating screw 45 it is possible to move at least one of the closing elements 13 along the guide channel 14 so that the aforementioned closing elements 13 close on the shaped head of the tie rod or release the shaped head of the tie rod.

Moreover, the clamp 1 according to the invention comprises at least two jaws 3, of which at least one is movably connected to the support body 2 and is actuatable to be moved close to or away from the other of the jaws 3.

More specifically, with the expression "movably connected" referring to one of the jaws 3, it must be understood that such jaw 3 may translate along a movement direction X or rotate around an axis of revolution with respect to the support body 2 to which it is connected in order to move closer to or further away from the other jaw 3, in such a way as to be able to respectively retain or release a piece 100 to be worked or which has already been subjected to working operations.

Advantageously, as visible in the accompanying figures, the clamp 1 comprises at least two jaws 3, of which at least one is slidably connected to the support body 2 along a movement direction X and is actuatable to move along the movement direction X close to or away from the other jaw 3.

Preferably, according to both embodiments illustrated in the accompanying figures, the movement direction X is rectilinear.

Furthermore, according to the first embodiment, the clamp 1 comprises two jaws 3 and both jaws 3 are slidably connected to the support body 2 along a movement direction X and are actuatable to move close to or away from each other along the movement direction X.

According to an embodiment not illustrated in the accompanying figures, the clamp 1 comprises two jaws 3, both jaws 3 are mounted on the support body 2 and only one of them is slidably connected to the aforementioned support body 2 along the movement direction X and is actuatable to move along this movement direction X close to or away from the other jaw 3.

Otherwise, according to embodiment variants not illustrated, the movement direction X is curvilinear, for example an arc of a circle.

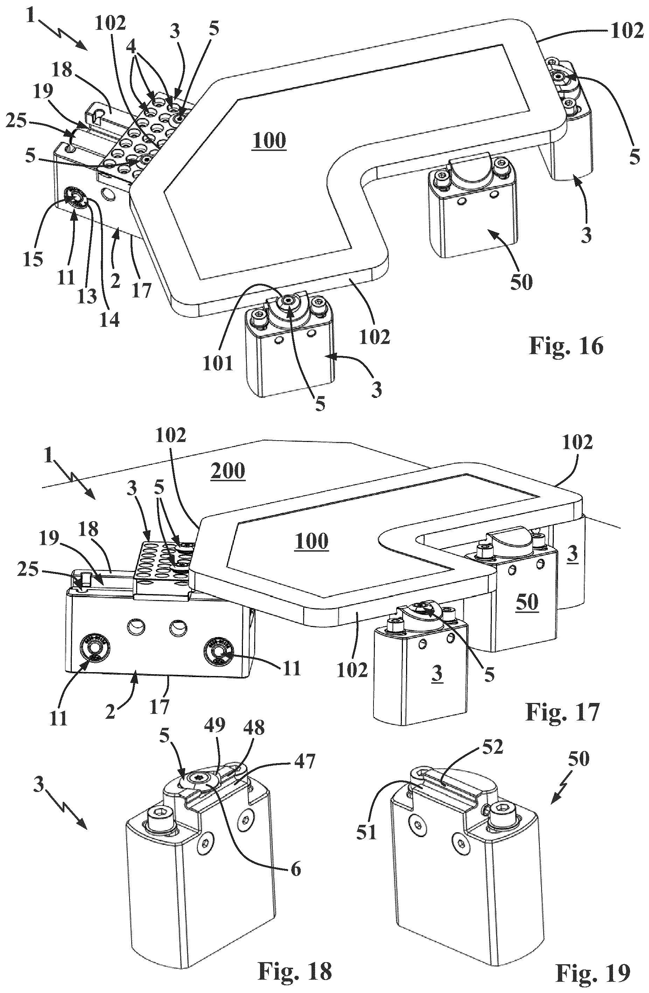

Still differently, according to the second embodiment illustrated in Figures 16 to 19, the clamp 1 comprises two or more jaws 3, one or more of the jaws 3 is separate from the support body 2 and is intended to be directly fixed to the support base 200 and only one of the jaws 3 is movably connected (in particular slidably connected along a rectilinear movement direction X) to the support body 2 (in turn intended to be fixed to the support base 200) and is actuatable to move close to or away from the other jaw 3 (if more jaws 3 are provided which are separate from the support body 2, the jaw 3 movably connected to the support body 2 is actuatable to move close to all the other jaws 3 or away from all the other jaws 3).

In particular, the clamp 1 according to this second embodiment allows for retaining a piece 100 having particularly large or particularly irregular dimensions with a plurality of sides, since the jaw 3 which is separate from the support body 2 may be fixed to the support base 200 at a point spaced from the one at which the support body 2 has been fixed and the jaw 3 which is slidably connected to the aforementioned support body 2 is actuatable to move close to the jaw 3 directly fixed to the support base 200 in such a way that the piece 100 is retained between the two jaws 3.

In more detail, the support body 2 is provided with a first face 17, which is intended to be placed on the support base 200, and a second face 18, which faces in the opposite direction to the aforementioned first face 17 and supports at least one of the two jaws 3, and in particular both jaws 3.

In particular, the coupling seat 12 (or the coupling seats 12 if the coupling means 11 comprise more than one tie rod) opens on the first face 17.

Advantageously, the clamp 1 in question comprises guide means 19 for the at least one jaw 3 slidably associated with the support body 2, in particular for both jaws 3 slidably associated with the support body 2.

The aforementioned guide means 19 advantageously comprise a guide groove 20 extending along the movement direction X, preferably obtained on the support body 2 (and in particular opening on the second face 18), and a slider 21 mechanically connected to each jaw 3 (in particular made in a single body with the corresponding jaw 3) and slidably inserted in the aforementioned guide groove 20 along the movement direction X.

Furthermore, in order to prevent the sliders 21 from accidentally separating from the guide groove 20, each slider 21 preferably extends from the corresponding jaw 3 with a narrow portion 22 and ends with a widened portion 23 and, furthermore, the guide means 19 comprise retaining shoulders 24, which are mechanically connected to the support body 2 (in particular made in one piece with the latter), extend at least partially inside the guide groove 20 and are interposed between the widened portions 23 of the sliders 21 and the jaws 3.

Furthermore, the clamp 1 in question advantageously comprises actuation means 25, preferably of the screw-nut type, arranged to make the at least one jaw 3 slidably associated with the support body 2 translate along the movement direction X, and in particular arranged to make both said jaws 3 translate along the movement direction X with respect to the support body 2.

In more detail, the aforementioned actuation means 25 comprise an at least partially threaded actuation shaft 26, extending along the movement direction X, rotating on itself around the movement direction X itself and positioned to pass through corresponding nut screw holes 27 obtained on the jaws 3 or on the sliders 21 mechanically connected to the jaws 3, in such a way that a rotation of the movement shaft X corresponds to a translation of the jaws 3 along the aforementioned movement direction X.

In particular, the actuation shaft 26 is provided with a first branch 28, which has a right-handed or left-handed thread and is inserted into the nut hole 27 of a corresponding jaw 3 or of the slider 21 mechanically connected to such jaw 3, and with a second branch 29, which has a thread of a type selected from right-handed and left-handed different from that of the first branch 28 and is inserted into the nut hole 27 of the other jaw 3 or of the slider 21 mechanically connected to this latter jaw 3, thus causing the jaws 3 to move in opposite directions to each other (and therefore moving away from or close to each other) when the actuation shaft 26 is rotated.

Preferably, the clamp 1 according to the invention also comprises a bearing 30, which is crossed by the actuation shaft 26 and supports it (in particular at a central portion 31 thereof interposed between the first branch 28 and the second branch 29) in rotation around the movement direction X.

In more detail, the bearing 30 may be a ball bearing, as shown for example in Figure 3 and Figure 4, or it may be a bearing of another type, such as a roller bearing.

Even more preferably, the bearing 30 is provided with a support ring 32, which is mechanically connected to the support body 2 and is crossed by the actuation shaft 26, and with a plurality of rolling elements 33 (for example balls), which are housed in the support ring 32 and interposed between the latter and the actuation shaft 26 itself.

Furthermore, the support ring 32 is in particular provided with one or more interlocking portions 34 housed in corresponding recesses 35 obtained on the support body 2 and at least partially counter-shaped with respect to the same interlocking portions 34, so as to guarantee a good coupling between the bearing 30 and the support body 2.

Preferably, the actuation shaft 26 extends along the movement direction X within the guide groove 20 and, furthermore, the bearing 30 is in particular at least partially housed in the same guide groove 20.

According to the idea underlying the present invention, the clamp 1 comprises at least one insert 5 mounted on each jaw 3 and the inserts 5 are each provided with a retention portion 6 susceptible of being inserted in a corresponding first milled groove 101 substantially counter-shaped with respect to the same retention portion 6 and made on one side 102 of a piece 100 to be blocked in position (in particular obtained with an elongated shape along the aforementioned side 102).

In more detail, the provision of inserts 5 provided with retention portions 6 counter-shaped with respect to the first milled grooves 101 obtained (in particular with an elongated shape) on the sides 102 of a piece 100 allows the piece 100 to be blocked in a specific position having a predetermined orientation. In fact, when the retention portions 6 of the inserts 5 are inserted into the first milled grooves 101 on the opposite sides 102 of a piece 100, the piece 100 cannot translate along the movement direction X of the jaws 3 as it is interposed between them, it cannot translate along directions transversal to the aforementioned movement direction X as the first milled grooves 101 are engaged by the counter-shaped retention portions 6 of the inserts 5 and, furthermore, it cannot rotate by changing its orientation due to the shape and/or the number of the first milled grooves 101 on each side 102. Therefore, thanks to the clamp 1 according to the invention it is possible to subject the piece 100 to a working operation (for example a material removal operation such as roughing, drilling and the like, or a finishing operation, such as polishing, lapping and the like) while it is blocked by the clamp 1 in question with the retention portions 6 of the inserts 5 inserted in the corresponding and counter-shaped first milled grooves 101, move the jaws 3 away to free the piece 100 and subject it to other working operations (for example in a different machine tool with respect to the one on whose support base 200 the clamp 1 is installed, which other working operations may include other material removal or finishing operations, or alternatively or in addition also a heat treatment), and reposition the piece 100 again in the clamp 1 with the inserts 5 engaging the first milled grooves 101 by means of their retention portions 6 bringing the piece 100 back in exactly the same position as before, without having to recalibrate the machine tools (since the machine tool's electronic control unit already knows the position of the piece with its orientation and can therefore immediately start working it again).

Furthermore, the clamp 1 of the first embodiment advantageously comprises at least two inserts 5 mounted on one jaw 3 and at least two inserts 5 mounted on the other jaw 3.

Therefore, thanks to the provision of at least two inserts 5 for jaw 3, it is possible to lock a piece 100 in position in a particularly stable and safe manner, thus engaging it at, for example, four of its points, i.e. at four corresponding first milled grooves 101.

In this case, therefore with two inserts 5 on each jaw 3 and with two milled grooves 101 on each side 102 of the piece 100 to be worked, it is possible to retain the piece 100 precisely in position even if the milled grooves 101 have been made using a milling tool having a substantially spherical shape, which obtains, on the sides 102 of the piece 100, milled grooves 101 which have a substantially circular shape and which therefore differ from the milled grooves 101 with an elongated shape which may be made using a milling tool having a substantially discoid shape.

Therefore, even if the first milled grooves 101 had a circular shape on the respective sides 102 (and therefore the piece 100 could rotate around the retention portions 6 which are counter-shaped with respect to the aforementioned first milled grooves 101 obtained with a circular shape on the sides 102, if there was only one first milled groove 101 for each side 102), the use of two inserts 5 for each jaw 3 allows the piece 100 to be retained precisely and furthermore the electronic control unit of the machine tool (for example of CNC type) is able to safely determine the orientation and position of the piece 100 retained by the four inserts 5 simply starting from the position of the two first milled grooves 101 on one side 102 and from the position of the two first milled grooves 101 on the other side 102, without the need to carry out complicated calibrations of the tool in order to be able to carry out working operations on the piece 100 retained by the clamp 1 in question.

Alternatively, the clamp 1 of the second embodiment advantageously comprises at least one insert 5 (in particular two inserts 5) mounted on the jaw 3 movably connected to the support body 2 (preferably slidably connected to the support body 2 along a movement direction X, in particular a rectilinear one) and two or more jaws 3 separate from the support body 2, intended to be directly fixed to the support base 200 (in particular of a machine tool) and each carrying a corresponding mounted insert 5.

In this way, by using more than one jaw 3 separate from the support body 2, it is possible to fix each of these jaws 3 at points of the support base 200 specifically selected to adapt the clamp 1 to pieces 100 with particularly irregular shapes and to retain such irregular pieces 100 at at least three different points (i.e. at one point it is retained by the movable jaw 3 with one or more inserts 5 and at at least two other points it is retained by at least two jaws 3 separate from the support body 2 and carrying at least one corresponding mounted insert 5).

Advantageously, the jaws 3 of the second embodiment separated from the support body 2 are each provided with a first abutment surface 47, which is intended to be arranged substantially parallel to the support base 200 when the corresponding jaw 3 is fixed to the same support base 200, and with a second abutment surface 48, which is substantially orthogonal to the first contact surface 47.

Furthermore, such jaws 3 separated from the support body 2 are preferably each provided with a housing seat 49 opening onto the second abutment surface 48 and each containing at least part of the corresponding insert 5, which is mounted with its retention portion 6 which protrudes with respect to such second abutment surface 48 and adjacent to the first abutment surface 47.

In this way, the piece 100 to be worked may be firmly retained, being arranged to rest on the first abutment surfaces 47 and in contact with corresponding first sides 102 against the second abutment surfaces 48, with respect to which the retention portion 6 of the corresponding insert 5 protrudes so that it may be inserted into a respective first milled groove 101.

Preferably, the clamp 1 of the second embodiment may also comprise one or more support elements 50, each of which is intended to be fixed to the support base 200 and is provided with a third abutment surface 51, which is intended to be arranged substantially parallel to the support base 200 when the support element 50 itself is fixed to the support base 200, and with a fourth abutment surface 52, which is substantially orthogonal to the third abutment surface 51.

In this way, the support elements 50 may support the piece 100 at the respective third abutment surfaces and receive such piece 100 laterally in contact at the fourth abutment surfaces 52 to keep it precisely in position together with the other jaws 3 separated from the support body 2.

Advantageously, at least one of the jaws 3 is provided with a plurality of fixing seats 4 and at least one of the inserts 5 is removably mounted on such jaw 3 at one of the fixing seats 4.

According to the second embodiment illustrated in the accompanying Figures 16 to 19, only the jaw 3 movably connected to the support body 2 is provided with the plurality of fixing seats 4.

Otherwise, according to the first embodiment having advantageously two jaws 3 preferably both mounted on the support body 2, both jaws 3 are each provided with a plurality of fixing seats 4 and at least some of the inserts 5 (in particular all the inserts 5) are each removably mounted on the respective jaw 3 at one of the fixing seats 4.

In this way, it is possible to adapt the position of the inserts 5 from time to time by fixing them at other fixing seats 4 depending on the position of the first milled grooves 101 made on the piece 100 to be blocked.

For example, if some of the inserts 5 are removably mounted on the jaws 3 each at one of the fixing seats 4 and some of the inserts 5 are mounted on the jaws 3 in a non-removable manner, it is possible to change the position of the removable inserts 5 with respect to the non-removable ones to adapt the clamp 1 in question to the position in which the first milled grooves 101 were made on the piece 100.

If, however, all the inserts 5 are removably mounted on the jaws 3 each at one of the fixing seats 4, the clamp 1 according to the invention is particularly flexible, allowing the position of all the inserts 5 to be modified according to the position of the first milled grooves 101 on the piece 100.

Furthermore, since the inserts 5 are advantageously mounted in a removable manner at the fixing seats 4, the two inserts 5 on each jaw 3 may be fixed at fixing seats 4 that are distant from each other if the piece 100 has considerable dimensions and therefore has first milled grooves 101 on the same side 102 that are distant from each other, or the two inserts 5 on each jaw 3 may be fixed at fixing seats 4 that are close to each other if the piece 100 has small dimensions and therefore has first milled grooves 101 on the same side 102 that are close to each other.

According to the idea underlying the present invention, the retention portion 6 of each insert 5 has, on a first reference plane P1, a section with a first external profile 7 extended along at least one arc of circumference.

Advantageously, the first reference plane P1 is parallel to the movement direction X or containing the same movement direction X.

If the movement direction X is not rectilinear but curvilinear, the expression "parallel to the movement direction X or containing the same movement direction X" must be understood to mean that the reference plane P1 is parallel or coincident with the plane along which the curvilinear movement direction X extends.

Still differently, if the jaw 3 movably connected to the support body 2 is rotatably connected to the latter around an axis of revolution, the first reference plane P1 is preferably orthogonal to the axis of revolution of the aforementioned jaw 3.

In particular, the substantially circumferential arc shape of the first external profile 7 allows the retention portion 6 to adapt well to a first milled groove 101 obtained on a side 102 of the piece 100 to be blocked, since the first milled groove 101 is made by means of a rotationally operated milling tool which necessarily makes the same first milled groove 101 by hollowing out the material of the piece 100 and giving the aforementioned first milled groove 101 a depth (i.e. the dimension of the first milled groove 101 which is transversal to the respective side 102) with a pattern which is in turn substantially circumferential arc. In more detail, the first milled groove 101 has such depth with a substantially circular arc pattern irrespective of whether the milling tool is of the discoidal or spherical type.

Furthermore, always according to the idea underlying the present invention, the retention portion 6 of each insert 5 has, on a second reference plane P2 transversal to the first reference plane P1 (in particular orthogonal to the first reference plane P1), a section with at least one second tapered external profile 8 which is extended, narrowing up to an end 36 which has at least one point in common with the first external profile 7.

Preferably, as visible in the accompanying figures, such second external profile 8 has the shape of a trapezium having its minor base as the end 36 (in this case, in particular, the end 36 which corresponds to the minor base of a trapezium is a line belonging to the second external profile 8 and having a point in common with the first external profile 7).

In this way, the retention portion 6 is able to adapt to first milled grooves 101 having a thickness (i.e. the size of the first milled groove 101 which is substantially parallel to the respective side 102) which decreases starting from the side 102 on which they are made towards their own bottom. Advantageously, such first milled grooves 101 are those made using a traditional discoidal milling tool, which in more detail extends with a substantially discoidal shape on a plane of arrangement orthogonal to its own rotation axis and is provided with cutting elements distributed around the aforementioned rotation axis, in which in particular the cutting elements have a thickness which decreases as they move away from the rotation axis itself.

Advantageously, the retention portion 6 of each insert 5 has a substantially discoidal shape (in particular in a similar manner to the milling tool that is used to make the first milled grooves 101). Advantageously, the retention portion 6 of each insert 5 has a specular development with respect to the first reference plane P1 on which the first external section 7 extends.

Advantageously, the retention portion 6 is shaped as at least a part of a solid of rotation extending around an axis (in particular around the rotational symmetry axis Y introduced below) orthogonal to the first reference plane P1.

Differently, according to an embodiment variant of the inserts 5 not shown in the accompanying figures, the second tapered external profile 8 also extends for at least one arc of circumference between two ends and develops starting from a chord of circumference, which is placed to connect the two ends of the arc of circumference, narrowing up to the end 36, which is a point of the aforementioned arc of circumference interposed between the two ends.

In this way, an insert 5 with retention portion 6 having both the first external profile 7 and the second external profile 8 (which extends on a second reference plane P2 transversal to the first reference plane P1 on which the first external profile 7 extends) with the shape of an arc of circumference is suitable for being inserted into a corresponding first milled groove 101 made by means of a spherical milling tool.

Consequently, thanks to the first external profile 7 which is substantially an arc of a circumference and to the second external profile 8 which is tapered (whether it has the shape of a substantially trapezoid or extends along an arc of a circumference), the retention portions 6 are suitable for engaging the first milled grooves 101 made with the usual milling tools available to all companies operating in the mechanical engineering sector, in which such first milled grooves 101 are simply obtained by placing the traditional rotating milling tool next to the side 102 of the piece 100 to be worked, without having to foresee any particular geometry or path followed by the tool.

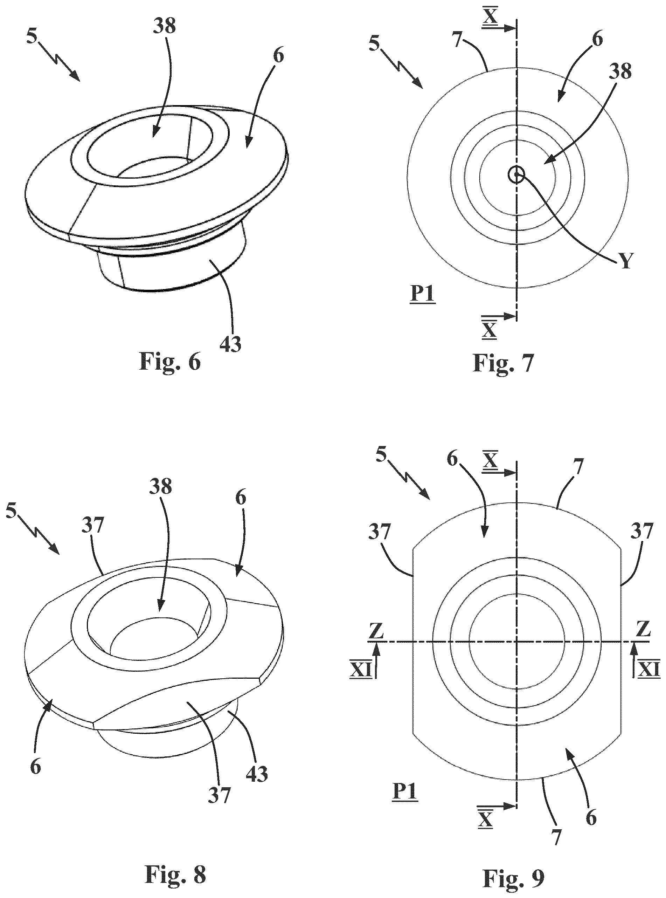

Advantageously, according to the embodiment of the insert 5 illustrated in Figure 6, the insert 5 is provided with a rotational symmetry axis Y orthogonal to the first reference plane P1 and the retention portion 6 extends (in particular by 360°) around the aforementioned rotational symmetry axis Y.

Therefore, in particular, according to such embodiment of Figure 6, the retention portion 6 preferably has a section, on the aforementioned first reference plane P1, having a first external profile 7 which defines a circumference and, furthermore, such retention portion 6 even more preferably has a section, on any second reference plane P2 orthogonal to the first reference plane P1 and containing the rotational symmetry axis Y, with two second external profiles 8, which have the rotational symmetry axis Y interposed between them and have their ends 36 facing in opposite directions with respect to the rotational symmetry axis Y.

Furthermore, in this way, when an operator fixes an insert 5 to one of the jaws 3, he/she does not have to worry about correctly orienting the same insert 5 around the rotational symmetry axis Y, since any part of the retention portion 6 may be inserted into a first milled groove 101.

In essence, therefore, the retention portion 6, extending around the rotational symmetry axis Y and having such first and second external profile 7, 8, approximately corresponds to a solid of rotation generated by the rotational actuation of a traditional milling tool (disc-shaped or spherical) briefly described above.

In more detail, the inserts 5 with the retention portion 6 extending around the rotational symmetry axis Y are particularly convenient to use when large pieces 100 need to be clamped, which have initial milled grooves 101 distant from each other and then inserts 5 removably mounted on the jaws 3 at non-adjacent fixing seats 4.

However, if it is necessary to retain small-sized pieces 100 and it is therefore necessary to position the inserts 5 at adjacent fixing seats 4, such inserts 5 with the retention portion 6 extending around the rotational symmetry axis Y may not be suitable, since the retention portions 6 of two inserts 5 mounted adjacently on the same jaw 3 may interfere.

To allow the retention of small-sized pieces 100 which require the positioning of inserts 5 on the same jaw 3 at adjacent fixing seats 4, it is advantageous to use inserts 5 according to the embodiment illustrated in Figure 8, which are described below.

Advantageously, the insert 5 of the embodiment of Figure 8 is provided with two lateral faces 37 transversal (in particular orthogonal) to the first reference plane P1, between which at least one retention portion 6 extends, which, as stated above, preferably has a section, on the aforementioned first reference plane P1, with a first external profile 7 extending along an arc of a circumference and, even more preferably, a section, on a second reference plane P2 transversal to the aforementioned first reference plane P1, with at least a second tapered external profile 8 which is extended, narrowing up to one end 36 thereof which has at least one point in common with the first external profile 7.

Therefore, when two inserts 5 of this type are mounted on the same jaw 3 at adjacent fixing seats 4, each of these inserts 5 will have one of the two lateral faces 37 opposite (and possibly directly in contact with) one of the two lateral faces 37 of the other insert 5.

Preferably, the insert 5 of the embodiment of Figure 8 is provided with a symmetry plane Z orthogonal to the first reference plane P1 and is provided with two retention portions 6 that are specular with respect to the aforementioned symmetry plane Z, so that even more preferably the retention portions 6 have, on a second reference plane P2 orthogonal to the first reference plane P1 and to the symmetry plane Z, corresponding sections with two second external profiles 8, which have the same symmetry plane Z interposed between them and have their ends 36 facing in opposite directions with respect to the aforementioned symmetry plane Z.

In this way, an operator may indifferently fix an insert 5 according to the embodiment of Figure 8 on a jaw 3 indifferently with a retention portion 6 or with the other retention portion 6 facing the opposite jaw 3.

In more detail, the lateral faces 37 are orthogonal to the first reference plane P1 and to the symmetry plane Z and, furthermore, the two retention portions 6 extend between the aforementioned lateral faces 37, are specular with respect to the symmetry plane Z and in particular both have a section, on the first reference plane P1, with their own first external profile 7 extending along a circumferential arc.

From a production point of view, such shapes of the inserts 5 according to Figure 6 and according to Figure 8, allow to initially produce (for example by casting, cold forming, turning or the like) inserts 5 which are all identical according to Figure 6 (i.e. those provided with the rotational symmetry axis Y) and, depending on the needs (when it is necessary to block in position pieces 100 with reduced dimensions) to remove material from such inserts 5 of Figure 6 until the side faces 37 are obtained, thus giving the insert 5 the shape of Figure 8 and defining two retention portions 6 opposite with respect to a symmetry plane Z.

Advantageously, the fixing seats 4 of the jaws 3 are at least partially threaded holes and each insert 5 (both according to the embodiment of Figure 6 and according to the embodiment of Figure 8) is provided with a through opening 38 and is removably fixed on a respective jaw 3 by means of a fixing screw 39 placed through the through opening 38 and inserted in a fixing seat 4.

Preferably, the fixing seats 4 are each provided with an access mouth 40, a threaded section 41 and an enlarged section 42 extending between the access mouth 40 and the threaded section 41 and, furthermore, each insert 5 is provided with a centering portion 43 extending around the through opening 38 and insertable (in particular substantially to size) in the enlarged section 42 of the fixing seat 4 at which the corresponding insert 5 is removably fixed.

In more detail, the through opening 38 extends transversally (in particular orthogonally) to the first reference plane P1 on which the section of the retention portion 6 extends having the first external profile 7 in the shape of a circumferential arc.

In particular, according to the embodiment of the insert in Figure 6, the through opening 38 extends along the rotational symmetry axis Y and the retention portion 6 extends around the aforementioned through opening 38.

Furthermore, according to the embodiment of the insert in Figure 8, the through opening 38 is interposed between the two retention portions 6 which are specular with respect to the symmetry plane Z. According to embodiments not illustrated in the accompanying figures, the fixing seats 4 may not be at least partially threaded holes and the inserts 5 may not be provided with the through opening 38 designed to be engaged by a corresponding fixing screw 39.

For example, according to an embodiment that does not provide fixing screws 39, each insert 5 is provided with a connecting portion substantially counter-shaped with respect to each fixing seat 4 and susceptible of being inserted into one of the fixing seats 4 by interlocking.

Or, alternatively, each fixing seat 4 is delimited by an internal side surface on which one or more nonlinear engagement grooves are formed and each insert 5 is provided with a base portion, which has a side retaining pin for each engagement groove and is susceptible of being inserted into one of the fixing seats 4 with the side retaining pins sliding within the engagement grooves, so as to create a "bayonet" type coupling.

Advantageously (in particular according to the first illustrated embodiment or with embodiments not illustrated in which two jaws 3 are provided, one of which is separate from the support body 3), the jaws 3 are each provided with an internal face 9, which faces the internal face 9 of the other jaw 3, and with a top face 10, which is transverse (in particular orthogonal) with respect to the internal face 9 of the corresponding jaw 3 and faces in the opposite direction to the support body 2.

Preferably, the internal face 9 is also transverse (in particular orthogonal) to the movement direction X.

Furthermore, each jaw 3 is preferably provided with a base face 44, which faces in the opposite direction to the top face 10 and is arranged on the support body 2 (in particular on the second face 18 of the latter). In particular, each slider 21 (whether mechanically connected to or made in one piece with the respective jaw 3) extends starting from the base face 44 of the respective jaw 3.

Furthermore, the fixing seats 4 are advantageously obtained on the top faces 10 of the jaws 3 and the inserts 5 are removably mounted on the top faces 10 of the aforementioned jaws 3 at each fixing seat 4. In particular, therefore, the fixing seats 4 have their access mouths 40 on the top faces 10 of the jaws 3 and extend starting from them.

In this way, an operator may easily and removably fix and disconnect the inserts 5 from the jaws 3 as needed without having the movements of his/her hands limited by any component of the clamp 1 in question, precisely because the fixing seats 4 are obtained on the top faces 10 and not on the internal faces 9.

Preferably, the inserts 5 are fixed on the jaws 3 each with their first reference plane P1 parallel to the top face 10 of the corresponding jaw 3 and with their second reference plane P2 orthogonal to the top face 10 and to the internal face 9 of the corresponding jaw 3.

Furthermore, the inserts 5 may be removably fixed to the jaws 3 with the end 36 of the second external profile 8 protruding with respect to the first face 9 of the corresponding jaw 3 towards the other jaw 3 or not protruding.

Advantageously, the fixing seats 4 are distributed on each jaw 3 (in particular distributed on each top face 10) according to a positioning matrix M having several rows R and several columns C transversal to the rows R, for example seven rows R and three columns C.

In this way, it is easy to block even pieces 100 having irregular shapes or with sides 102 on which the first milled grooves 101 are obtained which are not parallel to each other. For example, for a piece 100 of considerable size and sides 102 that extend from one end to the other, approaching each other, it is possible to removably fix on each jaw 3 an insert 5 in the first row R and in the column C closest to the internal face 9 and an insert 5 in the last row R and in the column C furthest from the internal face 9. Furthermore, the distribution of the fixing seats 4 on the jaws 3 according to a positioning matrix M facilitates the retaining of pieces 100 on which a cavity is obtained which is internally delimited by the sides 101 which are counter-facing to each other, since in this case the inserts 5 may be positioned at the fixing seats 4 belonging to the columns C which are furthest from the internal face 9 and the jaws 3 are operated away from each other so that the retention portions 6 of the inserts 5 fit into the first milled grooves 101 obtained on the sides 101 inside the cavity of the piece 100.

The present invention also includes a method 300 for working a piece 100, which in particular uses a clamp 1 for retaining a piece 100 as described heretofore.

For the sake of simplicity, the structural features of the clamp 1 described above, whether introduced as necessary or optional, are to be considered advantageously referable to the clamp 1 used in the method 300 in question without having to be repeated.

The method 300 in question involves a first step 301 of arranging a piece 100 to be worked (in particular metallic), which is provided with at least two sides 102 that are opposite each other.

In more detail, the sides 102 may be planar and be substantially parallel to each other or inclined (for example if the piece has the shape of a parallelepiped or prism), or they may be irregular with a shape which deviates from planarity. If the piece 100 has curved surfaces, for example because it has a cylindrical or spherical geometry, sides 102 may be understood as two diametrically opposed portions of the same piece 100. Furthermore, in the case in which the piece 100 is provided with an internal cavity and must be held at the aforementioned internal cavity, sides 101 are understood to be two opposing portions of the internal surface which delimits the aforementioned cavity.

Furthermore, the method 300 according to the invention provides for a first working step 302, in which at least material is removed from the piece 100 at the sides 102 by means of a milling tool to produce at least one first milled groove 101 on each side 102, said first milled groove 101 extends in particular with an elongated shape along the respective side 102 of the piece 100.

In more detail, the first 101 milled grooves are made using the same milling tool and therefore have the same shape and dimensions.

Furthermore, the method 300 provides for a second preparation step 303 of at least one clamp 1, in particular of the type described above.

Such clamp 1 is provided with a support body 2, which is fixed to a support base 200 in the aforementioned second preparation step 303, said support base 200 is part in particular of a machine tool. Moreover, the clamp 1 comprises at least two jaws 3, of which at least one is movably connected to the support body 2 (advantageously, slidably connected along a movement direction X, preferably rectilinear) and is actuatable to move (in particular, along the movement direction X) close to or away from the other jaw 3.

Advantageously, according to the first embodiment, the clamp 1 comprises two jaws 3 and both jaws 3 are slidably connected to the support body 2 along a movement direction X and are actuatable to move close to or away from each other along the movement direction X.

Otherwise, as previously explained, according to the second embodiment, two or more jaws 3 are provided and one or more of the jaws 3 is separate from the support body 2 and is directly fixed to the support base 200 during the aforementioned second preparation step 303 and only one of the jaws 3 is movably connected to the support body 2 (in particular slidably connected to the support body 2 along the movement direction X) and is actuatable to move close to or away from the other jaw 3 (or the other jaws 3, if more than one jaw 3 is provided, separate from the support body 2 and arranged to be directly fixed to the support base 200).

In particular, such second embodiment allows retaining pieces 100 having considerable dimensions or with particularly complex shapes with a plurality of sides 102 extending at opposite parts of the piece 100, since the jaw 3 (or even more than one jaw 3) which is directly fixed to the support base 200 may be positioned at a point distant from that in which the support body 2 is fixed and/or specifically selected to adapt to the particular shape of the piece 100.

Furthermore, the clamp 1 is provided with at least one insert 5 mounted on each jaw 3 and such inserts 5 are each provided with a retention portion 6, which is substantially counter-shaped with respect to a corresponding first milled groove 101 and is susceptible to being inserted into the aforementioned corresponding first milled groove 101.

In more detail, since the first milled grooves 101 are made using the same milling tool and are therefore identical, the retention portion 6 of each insert 5 may advantageously be inserted substantially to size into each of the first milled grooves 101.

Furthermore, in the aforementioned second preparation step 303 more than one clamp 1 may be arranged on the support base 200 (in particular according to the first embodiment with two jaws 3 mounted on the same support body 2), for example for the purpose of retaining particularly bulky pieces 100 which need to be supported by the jaws 3 with the inserts 5 at several points on their sides 102.

Alternatively, according to embodiment variants not illustrated, in the second preparation step 303, the support body 2 of a clamp 1 having at least one jaw 3 rotatably connected to the aforementioned support body 2 around an axis of revolution may be fixed to the support base 200.

In more detail, the second preparation step 303 may be performed before the first preparation step 301 and the first working step 302, or it may be concurrent to the first preparation step 301 and prior to the first working step 302, or alternatively it may be subsequent to both the first preparation step 301 and the first working step 302.

The method 300 in question also comprises a first clamping step 304, in which at least one jaw 3 is actuated to move (advantageously along the movement direction X, according to both illustrated embodiments of the clamp 1) so that the retention portions 6 of the inserts 5 fit into the first milled grooves 101 obtained on the opposite sides 102 of the piece 100 and block the aforementioned piece 100 in a first work position.

In such first clamping step 304, if the opposite sides 102 of the piece 100 are facing in opposite directions to each other, the piece 100 is advantageously arranged between the jaws 3 of the clamp 1 spaced apart from each other and at least one jaw 3 is actuated to move along the movement direction X towards the other jaw 3 (preferably, both jaws 3 are actuated to move along the movement direction X towards each other, according to the first embodiment of the clamp 1).

Otherwise, if the piece 100 is provided with an internal cavity and the opposite sides 102 (on which the first milled grooves 101 are made) are opposite each other and placed to at least partially delimit the aforementioned cavity, in the first clamping step 304 the piece 100 is advantageously arranged so that the jaws 3 are contained within the aforementioned cavity and at least one jaw is actuated to move along the movement direction X away from the other jaw 3 (in particular, both jaws 3 are actuated to move along the movement direction X away from each other, according to the first embodiment of the clamp 1) so that the retention portions 6 of the inserts 5 are inserted into the first milled grooves 101 obtained on the opposite sides of the piece 100 which at least partially delimit the cavity.

Furthermore, the method 300 in question also provides for a second processing step 305, in which the piece 100 is subjected to one or more processing operations (such as for example a material removal operation such as roughing, drilling, milling and the like, or a surface finishing operation such as polishing, lapping or the like) while the piece 100 is locked in the first work position by the clamp 1 with the retention portions 6 of the inserts 5 inserted in the corresponding first milled grooves 101.

In more detail, since the retention portions 6 are counter-shaped with respect to the first milled grooves 101 (which, as mentioned above, extend in particular with an elongated shape on the respective side 102 or are provided in a number greater than one for each side 102), the first work position of the piece 100 is defined in a precise and repeatable manner. In fact, the piece 100 is prevented from moving along the movement direction X of the jaws 3, as it is interposed between the jaws 3 themselves, and along directions transversal to the movement direction X, as it is retained by the retention portions 6 inserted in the first milled grooves 101 obtained in depression on the sides 102. Furthermore, the first work position advantageously provides for a specific orientation of the piece 100, since the first milled grooves 101 preferably have an elongated shape on the respective sides 102 and/or are provided in greater number than one on each side 102 and, therefore, the piece 100 may not rotate around the retention portions 6 which are counter-shaped with respect to the same first milled grooves 101. Therefore, if the jaws 3 are moved away after the second working step 305 to remove the piece 100 from the clamp 1 (for example to be able to subject it to other working operations performed by means of a different machine tool), it is always possible to subsequently bring the piece 100 back exactly to the same first work position simply by again actuating at least one of the jaws 3 until the retention portions 6 are inserted into the first milled grooves 101, so as to allow the machine tool on whose support base 200 the clamp 1 is installed to carry out further working operations without having to recalibrate its tools.

Advantageously, the first working step 302 in which the first milled grooves 101 are made may be performed using a machine tool different from the one set up to perform the one or more working operations of the second working step 305, on whose support base 200 the clamp 1 is in particular installed.

For example, if the first working step 302 is performed on a machine tool different from the one on whose support base 200 the clamp 1 is installed, the piece 100 may be retained in position in the aforementioned different machine tool during the first working step 302 by means of another traditional type of clamp or by means of a clamping device and this machine tool may use a special feeler to establish the position of the piece 100 before actuating the milling tool in order to perform the first milled grooves 101. Differently, the first working step 302 in which the first milled grooves 101 are made may be performed using the same machine tool set up to perform one or more working operations of the second working step 305, on whose support base 200 the clamp 1 is in particular installed.

In this case, for example, in the first working step 302, the piece 100 is advantageously placed between the jaws 3 of the clamp 1 spaced apart from each other, at least one jaw 3 is actuated to move along the movement direction X towards the other jaw 3 so that the piece 100 is blocked by the internal surfaces 9 (the internal surfaces 9 directly abut against the piece 100 without first milled grooves 101 if the inserts 5 do not protrude with respect to the internal surfaces 9 and, instead, in the case in which the aforementioned inserts 5 protrude, they may be removed from the jaws 3), a feeler of the machine tool is used to establish the position (with relative orientation) of the piece 100 and, finally, material is removed at the sides 102 by means of a milling tool to create at least one first milled groove 101 on each side 102. In any case (irrespective of whether the first working step 302 is performed by the machine tool set up to perform the one or more working operations of the second working step 305 or whether the first working step 302 is performed by a different machine tool), the machine tool set up to perform the one or more working operations of the second working step 305 advantageously has saved in its memory a three-dimensional model of the piece 100 with the first milled grooves 101 resulting from the first working step 302 and, therefore, is able to establish the first work position of the piece 100 after the first clamping step 304 without the need to perform any complicated calibration step of its tools.

Advantageously, the milling tool (used in the first working step 302) is provided with a rotation axis and a plurality of cutting elements distributed around the rotation axis.

Furthermore, in the first working step 302, the milling tool is advantageously driven in rotation around its own rotation axis and is brought close to each side 102 of the piece 100 by means of a translation along a direction transversal to the rotation axis and to the corresponding side 102 to produce at least one respective first milled groove 101 on it (in particular, this milling tool is brought close to each side 102 of the piece 100 with the rotation axis substantially parallel to the aforementioned side 102).

Furthermore, the retention portion 6 of the inserts 5 advantageously corresponds to at least a part of a rotation solid generated by such a milling tool actuated in rotation around its own rotation axis.

In this way, the retention portion 6 is certainly counter-shaped with respect to a first milled groove 101 made simply by placing the cutting elements of the milling tool rotating around its rotation axis against the side 102 of the piece 100 (and it was not necessary to follow any complicated path of the milling tool to make first milled grooves 101 with elaborate shapes so that the retention portions 6 keep the piece 100 precisely in position).

Preferably, the cutting elements of the milling tool employed in the first working step 302 have, on a plane containing the rotation axis, thickness which decreases in moving away from the same rotation axis. Furthermore, the retention portion 6 of each insert 5 preferably has, on a first reference plane P1 (in particular parallel to the movement direction X or containing the movement direction X if the at least one jaw 3 movably connected to the support body 2 is slidable along such movement direction X, or orthogonal to the revolution axis if the at least one jaw movably connected to the support body 2 is rotatable around such revolution axis), a section with a first external profile 7 extending along at least one arc of circumference (since, in this way, the retention portion 6 is suitable for a first milled groove 101 which has a depth, i.e. its transversal dimension to the side 102 of the piece 100, with a circular arc pattern due to the way in which the cutting elements move when the milling tool is actuated in rotation). Furthermore, in order for the retention portion 6 to be suitable for insertion into a first milled groove 101 made using a milling tool with cutting elements of decreasing thickness, the retention portion 6 of each insert 5 preferably has, on a second reference plane P2 transversal to the first reference plane P1, a section with at least one second tapered external profile 8 which is extended, narrowing up to its own end 36 which has at least one point in common with the first external profile 7.

According to a possible implementation of the method according to the invention, the milling tool extends with a disc-like shape on its own lying plane orthogonal to the rotation axis and the cutting elements have, on a plane containing the rotation axis, a substantially trapezoidal shape with its own larger base facing towards the same rotation axis and its own smaller base facing in the opposite direction to the rotation axis. In this case, the second external profile 8 of the retention portion 6 of the inserts 5 has the shape of a trapezium having its smaller base as the end 36.

Differently, according to another possible implementation of the method according to the invention, the milling tool has a substantially spherical shape and the cutting elements define, on a plane containing the rotation axis, arcs of circumference. In this case, the second external profile 8 of the retention portion 6 of the inserts 5 extends for at least one arc of circumference between two ends and develops starting from a chord of circumference, which is placed to connect the two ends of the arc of circumference, narrowing up to the end 36, which is a point of the aforementioned arc of circumference interposed between the two ends.

Advantageously, in order to retain the piece 100 in the first work position as stably and safely as possible, during the first working step 302 material is removed from the piece 100 at the sides 102 by means of the milling tool to produce two first milled grooves 101 adjacent to each other on one side 102 of the piece 100 and two first milled grooves 101 adjacent to each other on the other side 101 of the piece 100. Furthermore, the clamp 1 is advantageously provided with at least two inserts 5 mounted on one of the jaws 3 and at least two inserts 5 mounted on the other jaw 3 and, during the first clamping step 304, at least one of the jaws 3 is actuated to move so that the retention portions 6 of the two inserts 5 mounted on one of the jaws 3 are inserted into the two corresponding first milled grooves 101 obtained on one of the sides 102 of the piece 100 and so that the retention portions 6 of the two inserts 5 mounted on the other jaw 3 are inserted into the two corresponding first milled grooves 101 obtained on the other of the sides 102 of the piece 100.

In particular, the provision of making two first milled grooves 101 on each side 102 during the first working step 302 allows a piece 100 to be retained in a stable and safe manner by means of a clamp 1 provided with two jaws 3 (irrespective of whether both jaws 3 are connected to the support body 2 or whether one of them is separated from the support body 2).

In this way, therefore, the piece 100 is not retained only at two first milled grooves 101 (one for each side 102), but is retained at four first milled grooves 101 (two on each side 102), making the locking of the piece 100 in the first work position particularly safe (even in the case in which the first milled grooves 101 have a substantially circular shape as they are made by means of a spherical milling tool). Alternatively, by means of a clamp 1 according to the second embodiment, the piece 100 may be retained in position in a stable and safe manner by also making a single first milled groove 101 on a plurality of sides 102, but this second embodiment requires fixing a plurality of jaws 3 (separate from the support body 2) directly onto the support base 200.

Advantageously, at least one of the jaws 3 of the clamp 1 is provided with a plurality of fixing seats 4 and at least one of the inserts 5 is removably mounted on such jaw 3 at one of the fixing seats 4. Furthermore, in the second preparation step 303, at least one of the inserts 5 is removably mounted on the aforementioned jaw 3 by engaging one of the fixing seats 4 at where the first milled grooves 101 are positioned on the sides 102 of the piece 100.

Preferably, according to the first embodiment, both jaws 3 of the clamp 1 are each provided with a plurality of fixing seats 4 and the inserts 5 are each removably mounted on the respective jaw 3 at one of the fixing seats 4. Furthermore, in the second preparation step 303 of the clamp 1, the inserts 5 are preferably mounted on the jaws 3 engaging the fixing seats 4 depending on where the first milled grooves 101 are positioned on the sides 102 of the piece 100.

In this way, therefore, the method 300 in question may easily be adapted to machine pieces 100 with different shapes and sizes by simply fixing the inserts 5 to different fixing seats 4 during the second preparation step 303 of the clamp 1.

Furthermore, the method 300 in question advantageously comprises a release step 306 subsequent to the second working step 305, in which at least one jaw 3 of the clamp 1 is moved to release the retention portions 6 of the inserts 5 from the first milled grooves 101.

The method 300 in question also advantageously comprises a third working step 307 subsequent to the release step 306, in which the piece 100 is subjected to one or more working operations.

In particular, the one or more working operations of the third working step 307 may be performed by a machine tool different from the one that performs the one or more working operations of the second working step 305, or, as will be better described below, the one or more working operations of the third working step 307 may be performed by the same machine tool that performs the one or more working operations of the second working step 305.

Furthermore, advantageously, the method 300 according to the invention comprises a second tightening step 311 subsequent to the third working step 307, in which at least one jaw 3 is actuated to be moved such that the retention portions 6 of the inserts 5 are inserted in the first milled grooves 101 made on the opposite sides 102 of the piece 100 and block such piece 100 in said the work position.

Finally, the method 300 in question advantageously comprises a fourth working step 312 subsequent to the second tightening step 311, in which the piece 100 is subjected to one or more working operations while the piece 100 is blocked in the first work position by the clamp 1 with the retention portions 6 of the inserts 5 inserted in the corresponding first milled grooves 101.

In this way, by virtue of the creation of the first milling operations 101 during the first working step 302, it is possible to advantageously carry out a method 300 for working the piece 100 which essentially involves:
- a second working step 305, in which the piece 100 in the first work position is subjected to working operations (e.g. roughing, drilling, etc.) by the machine tool on whose support base 200 the clamp 1 is installed;
- a third working step 307, in which the piece 100 is subjected to working operations by a different machine tool or by the same machine tool, with the piece 100 arranged in a position different from the first work position (where such working operations may be heat treatments or other material removal or finishing operations performed for example on a part of the piece 100 different from that worked during the second working step 305); and
- a fourth working step 312 in which the piece 100 is subjected to further working operations while it is positioned exactly in the same first work position without it being necessary to carry out a complex calibration of the tools of the machine tool on whose support base 200 the clamp 1 is installed.

In more detail, the piece 100 is provided with a side surface 103 extending between the sides 102 and preferably having at least two workable portions 104 opposite each other.

In particular, the side surface 103 may be provided with a plurality of sides, if the piece 100 has the shape of a substantially parallelepiped, cube, prism or the like, and in this case the workable portions 104 may be opposite sides of the aforementioned side surface 103. Alternatively, the side surface 103 may be at least partially curved or cylindrical, in which case the opposite workable portions 104 are parts of the side surface 103 diametrically opposite each other.

Advantageously, the first working step 302 involves removing material from the piece 100 at the sides 102 using the milling tool to create the first milled grooves 101 adjacent to one of the workable portions 104.

By virtue of the implementation of the first milled grooves 101 adjacent to one of the two opposite workable portions 104, the workable portion 104 opposite to the one adjacent to the first milled grooves 101 is well exposed to the tools of the machine tool when the piece 100 is locked in the first work position by the clamp 1.

Therefore, preferably, in the second working step 305, the workable portion 104 of the side surface 103 of the piece 100 opposite the workable portion 104 adjacent to which the first milled grooves 101 are made during the first working step 302 is subjected to one or more working operations.

Furthermore, in order to save as many movements of the piece 100 as possible and thus obtain a simple and fast method 300, in the first working step 302 the workable portion 104 of the side surface 103 of the piece 100 adjacent to which the first milled grooves 101 are made during the same first working step 302 may advantageously be subjected to one or more working operations.

This is particularly advantageous since in the first working step 302 the piece must be retained substantially at the workable portion 104 opposite to that adjacent to the point of the sides 102 where the first milled grooves 101 are made and, therefore, such workable portion 104 adjacent to the point where the first milled grooves 101 are made is well exposed to the tools of the machine tool and may therefore easily be subjected to working operations, which may also be performed with tools different from the milling tool that makes the same first milled grooves 101.

Furthermore, the one or more working operations of the second working step 305 may advantageously provide that at least material is removed from the piece 100 at the sides 102 by means of the milling tool (in particular by means of the same milling tool used in the first working step 302) to produce at least one second milled groove on each side 102 adjacent to the workable portion 104 of the side surface 103 of the piece 100 opposite the workable portion 104 adjacent to which the first milled grooves 101 are produced during the first working step 302.

In more detail, the second milled grooves have substantially the same shape and dimensions as the first milled grooves 101 and the retention portion 6 of each insert 5 is therefore substantially counter-shaped with respect to a corresponding second milled groove and is susceptible of being inserted into a corresponding second milled groove.

In this way, the machine tool in the second working step 305 may produce second milled grooves which determine, when engaged by the retention portions 6, a specific position of the piece 100 different from the first work position.

In particular, therefore, when the first milled grooves 101 are engaged by the retention portions 6 of the inserts 5, the piece 100 assumes a precise first work position in which the workable portion 104 opposite to the point where the first milled grooves 101 are made is well exposed to the tools and, furthermore, when the second milled grooves are engaged by the retention portions 6, the piece 100 assumes another position in which the workable portion 104 adjacent to the first milled grooves 101 is well exposed to the tools. Therefore, the first milled grooves 101 and second milled grooves advantageously allow the piece 100 to be turned over at each new working step.

In more detail, the third working step 307 includes a clamping sub-step 308, in which at least one jaw 3 is operated to move so that the retention portions 6 of the inserts 5 fit into the second milled grooves obtained on the opposite sides 102 of the piece 100 and lock the piece 100 in a second work position, in which the piece 100 has a different orientation with respect to the first work position.

Furthermore, the third working step 307 advantageously provides for a working sub-step 309 subsequent to the clamping sub-step 308, in which the piece 100 is subjected to one or more working operations while the piece 100 is locked in the second work position by the clamp 1 with the retention portions 6 of the inserts 5 inserted in the corresponding second milled grooves.

In particular, in such working sub-step 309, the workable portion 104 of the side surface 103 of the piece 100 opposite the workable portion 104 adjacent to which the second milled grooves were made during the second working step 305 is subjected to one or more working operations.

That is, in other words, in such working sub-step 309, the workable portion 104 of the side surface 103 of the piece 100 adjacent to which the first milled grooves 101 were made during the first working step 302 is subjected to one or more working operations.

Furthermore, the third working step 307 preferably comprises a release sub-step 310 subsequent to the working sub-step 309, in which at least one jaw 3 of the clamp 1 is moved to release the retention portions 6 of the inserts 5 from the second milled grooves.

Therefore, the invention thus conceived achieves the pre-set objects.

## Claims

1. Clamp (1) for retaining a piece (100) to be worked, which comprises:
- a support body (2), which is intended to be fixed to a support base (200);
- at least two jaws (3), of which at least one is movably connected to said support body (2) and is actuatable to be moved close to or away from the other of said jaws (3);
said clamp (1) being **characterized in that** it comprises at least one insert (5) mounted on each said jaw (3); said inserts (5) each being provided with a retention portion (6) susceptible of being inserted in a corresponding first milled groove (101) substantially counter-shaped with respect to the same retention portion (6) and made on one side (102) of a piece (100) to be blocked in position;
the retention portion (6) of each said insert (5) having, on a first reference plane (P1), a section with a first external profile (7) extended along at least one arc of circumference;
the retention portion (6) of each said insert (5) having, on a second reference plane (P2) transverse to said first reference plane (P1), a section with at least one tapered second external profile (8) which is extended, narrowing up to one end (36) thereof that has at least one point in common with said first external profile (7).

2. Clamp (1) according to claim 1, **characterized in that** it comprises at least two inserts (5) mounted on a jaw (3) and at least two inserts (5) mounted on the other said jaw (3).

3. Clamp (1) according to claim 1 or 2, **characterized in that** at least one of said jaws (3) is provided with a plurality of fixing seats (4) and at least one of said inserts (5) is removably mounted on said jaw (3) at one of said fixing seats (4).

4. Clamp (1) according to claim 3, **characterized in that** said jaws (3) are each provided with an internal face (9), which is directed towards the internal face (9) of the other said jaw (3), and with a top face (10), which is transverse with respect to the internal face (9) of the corresponding said jaw (3) and is directed in the direction opposite said support body (2);
said fixing seats (4) being made on the top faces (10) of said jaws (3) and said inserts (5) being removably mounted on the top faces (10) of said jaws (3), each at one said fixing seat (4).

5. Method (300) for working a piece (100), which provides for:
- a first step (301) of arranging a piece (100) to be worked, which is provided with at least two sides (102) that are opposite each other;
- a first working step (302), in which material is removed from said piece (100) at least at said sides (102) by means of a milling tool in order to attain at least one first milled groove (101) on each said side (102);
- a second step (303) of arranging at least one clamp (1), which is provided with:
- a support body (2), which is fixed to a support base (200) in said second arranging step (304);
- at least two jaws (3), of which at least one is movably connected to said support body (2) and is actuatable to be moved close to or away from the other of said jaws (3);
- at least one insert (5) mounted on each said jaw (3); said inserts (5) each being provided with a retention portion (6), which is substantially counter-shaped with respect to a corresponding said first milled groove (101) and is susceptible of being inserted in said corresponding first milled groove (101);
- a first tightening step (304), in which at least one said jaw (3) is actuated to be moved such that the retention portions (6) of said inserts (5) are inserted in the first milled grooves (101) made on the opposite sides (102) of said piece (100) and block said piece (100) in a first work position;
- a second working step (305), in which said piece (100) is subjected to one or more working operations while said piece (100) is locked in said first work position by said clamp (1) with the retention portions (6) of said inserts (5) inserted in the corresponding said first milled grooves (101).

6. Method (300) according to claim 5, **characterized in that** said milling tool is provided with a rotation axis and with a plurality of cutting elements distributed around said rotation axis;
in said first working step (302), said milling tool being actuated in rotation around the said rotation axis thereof and being approached to each side (102) of said piece (100) by means of a translation along a direction transverse to said rotation axis and to the corresponding side (102) in order to attain at least one respective first milled groove (101) thereon;
the retention portion (6) of said inserts (5) corresponding to at least one part of a rotation solid generated by said milling tool actuated in rotation around said rotation axis thereof.

7. Method (300) according to claim 6, **characterized in that** the cutting elements of said milling tool employed in said first working step (302) have, on a plane containing said rotation axis, thickness which decreases in moving away from said rotation axis;
the retention portion (6) of each said insert (5) having, on a first reference plane (P1), a section with a first external profile (7) extended along at least one arc of circumference;
the retention portion (6) of each said insert (5) having, on a second reference plane (P2) transverse to the first reference plane (P1), a section with at least one tapered second external profile (8) that is extended, narrowing up to one end (36) thereof which has at least one point in common with said first external profile (7).

8. Method (300) according to any one of claims 5 to 7, **characterized in that**, in said first working step (302), material is removed from said piece (100) at said sides (102) by means of said milling tool in order to attain two first milled grooves (101) adjacent to each other on one side (102) of said piece (100) and two first milled grooves (101) adjacent to each other on the other side (101) of said piece (100);
said clamp (1) being provided with at least two inserts (5) mounted on one of said jaws (3) and with at least two inserts (5) mounted on the other of said jaws (3) and, in said first tightening step (304), at least one said jaw (3) being actuated to be moved such that the retention portions (6) of two said inserts (5) mounted on one of said jaws (3) are inserted in the two corresponding first milled grooves (101) made on one of the sides (102) of said piece (100) and such that the retention portions (6) of two said inserts (5) mounted on the other of said jaws (3) are inserted in the two corresponding first milled grooves (101) made on the other of the sides (102) of said piece (100).

9. Method (300) according to any one of the preceding claims, **characterized in that** at least one of the jaws (3) of said clamp (1) is provided with a plurality of fixing seats (4) and at least one of said inserts (5) is removably mounted on said jaw (3) at one of said fixing seats (4);
in said second arranging step (303), at least one of said inserts (5) being mounted on said jaw (3), engaging one of said fixing seats (4) as a function of where said first milled grooves (101) are positioned on the sides (102) of said piece (100).

10. Method (300) according to any one of the preceding claims, **characterized in that** it comprises:
- a release step (306) subsequent to said second working step (305), in which at least one jaw (3) of said clamp (1) is moved in order to make the retention portions (6) of said inserts (5) exit from said first milled grooves (101);
- a third working step (307) subsequent to said release step (306), in which said piece (100) is subjected to one or more working operations;
- a second tightening step (311) subsequent to said third working step (307), in which at least one said jaw (3) is actuated to be moved such that the retention portions (6) of said inserts (5) are inserted in the first milled grooves (101) made on the opposite sides (102) of said piece (100) and block said piece (100) in said first work position;
- a fourth working step (312) subsequent to said second tightening step (311), in which said piece (100) is subjected to one or more working operations while said piece (100) is blocked in said first work position by said clamp (1) with the retention portions (6) of said inserts (5) inserted in the corresponding said first milled grooves (101).
